# FASCICULE DE BREVET EUROPEEN

(11) **EP 1 985 172 B1**
(45) Date de publication et mention de la délivrance du brevet: **04.09.2013**
(21) Numéro de dépôt: 08005551.0
(22) Date de dépôt: 25.03.2008
(51) Int. Cl.: A01G 13/02

(54) **Nappe de protection munie de bords renforcés**
Abdeckfolie mit verstärkten Rändern
Protective layer equipped with reinforced edges

(30) Priorité: 24.04.2007 FR 0754656
(43) Date de publication de la demande: 29.10.2008
(73) Titulaire: FIBERWEB FRANCE SAS, 68600 Biesheim (FR)
(72) Inventeur: Libosvar, Raphaël, 68360 Soultz (FR); Fornara, Jean-Georges, 68600 Neuf-Brisach (FR); Gentet, Bérangère, 68000 Colmar (FR); Baltzinger, Gérard, 68320 Jebsheim (FR); Hunsinger, Didier, 68600 Biesheim (FR)
(74) Mandataire: Poupon, Michel

(56) Documents cités:
- EP-A- 1 602 272
- WO-A-2004/019674
- DE-B3-102006 005 688
- DE-U1-202004 010 060

## Description

L'invention concerne une nappe protectrice destinée essentiellement aux domaines agricole et horticole.

Pour les cultures légumières et maraîchères, en horticulture ornementale et dans les pépinières, il est fréquemment employé des voiles de forçage pour protéger les plantes et gagner en précocité de développement. Les premières fleurs ou légumes sur le marché concerné permettent des ventes aux consommateurs à des meilleurs prix et donc un meilleur revenu pour l'agriculteur ou l'horticulteur.

Ces voiles peuvent être employés pour différentes applications dans les domaines concernés (agressions extérieures : froid, gel, intempéries, insectes..). Il est toutefois principalement recherché l'effet d'isolation thermique et la description suivante fera donc état de nappe de protection pour désigner le même matériau.

Pour des raisons de coût et de rapidité de mise en oeuvre, il est usuellement employé des nappes protectrices de grandes largeurs déroulées à partir d'un dévidoir de manière à couvrir une surface de culture importante.

Les nappes protectrices utilisées dans les domaines considérés sont par exemple des films en matière plastique, des voiles non-tissés, des complexes réalisés par l'assemblage de nappes de matériaux différents, voire même des tissus.

Il existe donc une grande variété de nappes protectrices pouvant être utilisées, certaines transparentes, certaines percées d'ouvertures ou munies d'une porosité élevée, toutes devant cependant répondre à des critères communs pour l'application qui sont :
- une facilité de déroulage et de mise en place,
- une solidité suffisante de la nappe permettant sa réutilisation,
- des bords résistants autorisant la fixation au sol par divers moyens de manière à éviter que la nappe protectrice ne s'envole sous l'effet du vent.

Ce dernier point pose généralement problème car la nappe seule, même constituée par l'assemblage de plusieurs couches de différents matériaux, n'est pas suffisamment solide, notamment aux bords, zones très sollicitées lors de la manipulation et de la pose de la nappe.

Une telle solution de renfort est par exemple décrite dans le document US 4 044 501. Les renforts sont réalisés par repliement de la nappe sur elle-même et par rivetage des bords.

D'autres applications décrivent le scellage ou le collage du bord de la nappe repliée sur elle-même pour atteindre le même objectif, diverses applications ont été citées selon ce principe, par exemple dans les documents US 3 769 747, US 4 833 822, USD 386 653, US 3 482 609, WO 0235915, WO 05022984, WO 04019674.

Il est connu également par les documents US 4 366 017 et US 5 070 641 d'employer ou de créer des bandes renforcées longitudinales de manière à consolider les bords de la nappe.

Tous les documents cités précédemment répondent bien à la nécessité d'ancrer la nappe protectrice dans le sol après sa dépose et à son maintien durable. Toutefois, lors de l'application de la nappe, l'utilisateur agriculteur ou horticulteur est amené à réaliser une tension sur les deux bords de la nappe de manière à la déplier, la tendre et à éviter les flottements par d'éventuelles entrées d'air par les bords.

Lors des tractions sur les bords et la fixation au sol, il se produit des tensions localisées en certaines parties de la nappe qui sont plus importantes que sur d'autres. De fait, ces contraintes localisées entraînent très souvent des ruptures de la bande ou des amorces de déchirure qui conduisent à une destruction prématurée de la nappe protectrice et à ses conséquences.

La présente invention a pour objet de résoudre les inconvénients précités au moyen d'une nappe présentant des renforts particuliers et localisés.

A cet effet, la présente invention a pour objet une nappe de protection pour les cultures comportant au moins une couche sur laquelle est assemblé au moins un bord muni d'un renforcement, caractérisée en ce que ledit renforcement est assemblé sur ladite couche sur la totalité de sa surface, et qu'il est muni d'un côté interne ondulé, selon une forme sensiblement sinusoïdale. Le renforcement étant ondulé sur le côté interne de la nappe et l'ondulation étant de préférence de forme sensiblement sinusoïdale.

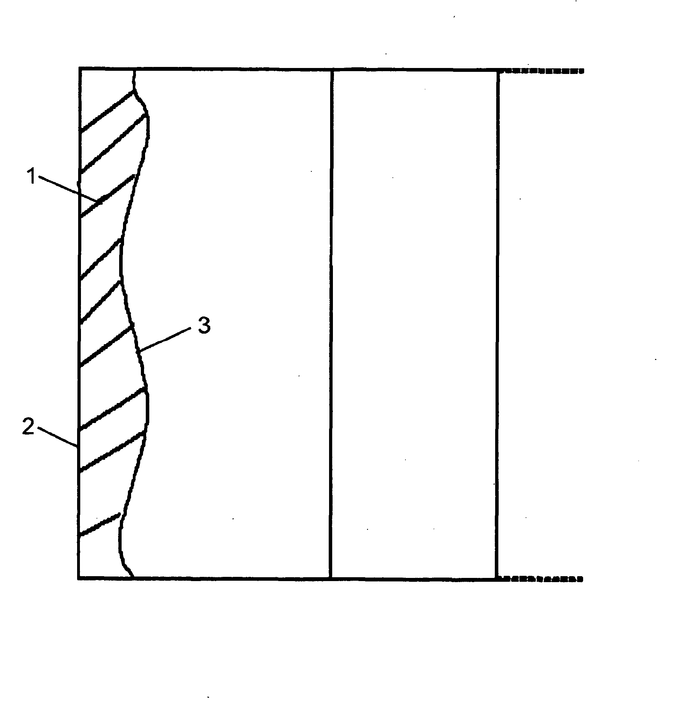

D'autres caractéristiques et avantages de l'invention se dégageront de la description qui va suivre en regard de la figure unique annexée, donnée à titre d'exemple non limitatif, qui est une vue de dessus de la nappe protectrice selon l'invention.

Comme le montre la figure, une nappe protectrice selon l'invention, en vue de dessus, comporte au moins un renforcement 1. Ce bord renforcé est généralement situé sur un rebord de la nappe qui se présente de façon rectiligne.

La nappe protectrice selon l'invention peut être un film plastique, un voile non tissé ou un complexe formé par l'assemblage de plusieurs feuilles de différents matériaux.

Dans la suite de la description un feuillet constitutif de la nappe est nommé couche, une nappe protectrice pouvant être constituée par une ou plusieurs couches, laquelle nappe peut donc être formée en une seule étape sur une machine à fabriquer des non-tissés, par exemple, ou en plusieurs étapes avec des phases de transformation consistant à assembler les couches entre elles au moyen d'adhésifs ou de procédés variés de complexage.

Selon l'invention, la nappe protectrice comporte au moins un bord renforcé. De préférence la nappe est renforcée sur deux bords opposés extérieurs. Ces bords peuvent être disposés indifféremment lors de l'utilisation sur les grands côtés de la nappe rectangulaire ou sur les petits côtés. Selon la découpe de la nappe rectangulaire renforcée, fabriquée en continu sur un outil industriel, les petits et les grands côtés pouvant en effet être inversés.

La nappe selon l'invention est caractérisée en ce que le côté interne 3 du renforcement 1 n'est pas identique au côté externe 2 de ce même renforcement 1, le côté interne 3 n'étant en effet pas rectiligne. Ce renforcement est en effet ondulé sur le côté interne 3 de la nappe, l'ondulation étant de préférence de forme sensiblement sinusoïdale.

Différentes méthodes peuvent être mises en oeuvre pour réaliser l'ondulation du renforcement.

Selon l'invention, l'ondulation du renforcement est réalisée par l'assemblage d'une couche disposant d'un bord non rectiligne sur une couche dont les bords sont rectilignes.

La couche dont un des bords n'est pas rectiligne peut être fabriquée selon une méthode spécifique ou encore découpée au moment de son enroulage ou juste avant assemblage.

Dans un procédé de complexage, il est envisageable d'assembler une feuille prédécoupée comportant des ondulations sur un de ces côtés avec une feuille de format habituel rectangulaire, c'est à dire dont les bords sont rectilignes.

Selon une autre variante de réalisation de la nappe selon l'invention, l'ondulation du renforcement est réalisée par l'assemblage d'une couche disposant d'un bord non rectiligne entre deux couches dont les bords sont rectilignes, la couche de renforcement étant prise en sandwich entre deux couches, lesquelles couches peuvent éventuellement être de natures différentes.

Selon une autre possibilité de réalisation de l'invention la bande de renforcement est réalisée par l'assemblage d'au moins deux couches dont l'une est appliquée au moyen d'un dispositif imprimant un mouvement oscillant latéral lors de son déroulage sur la couche inférieure, de manière à réaliser un renfort ondulé après assemblage.

Le mouvement d'oscillation permet de déplacer la couche de renforcement dans un sens perpendiculaire au sens de déroulage des couches dans la machine d'assemblage, c'est à dire latéralement dans un plan parallèle à celui de la feuille destinée à recevoir la couche de renforcement.

La couche de renforcement déposée de manière oscillante peut également être incluse entre deux couches identiques ou de natures différentes selon l'application envisagée pour la nappe protectrice.

Typiquement, quelle que soit la variante de réalisation considérée, la couche formant la bande de renforcement est de largeur réduite par rapport à la largeur de la nappe de protection finie.

De manière à ce que le renforcement soit efficace, c'est à dire que les contraintes puissent être bien absorbées sur les deux côtés de la nappe de protection, lorsque celle ci est mise en tension dans l'application, il est avantageux que les renforcements soient réalisés sur les deux bords mis en tension, c'est à dire que la nappe comporte une bande de renforcement sur au moins deux bords opposés.

Selon l'invention, l'assemblage entre les différentes couches formant la nappe protectrice est réalisé par collage thermique ou ultrason, fusion, calandrage ou coextrusion, avantageusement sur la totalité de la surface du renforcement. Les différents moyens permettant d'assembler la couche de renforcement avec une ou deux couches placées de part et d'autre sont connus en eux-mêmes.

Plusieurs variantes de la nappe protectrice sont possibles dans la mesure où il existe différents moyens permettant de fabriquer la nappe, plusieurs dispositifs permettant d'assembler des couches entre elles, différents systèmes de déroulage et d'assemblage des couches utilisables. Il peut aussi être employé des moyens variés pour réaliser le déplacement latéral oscillant de la couche formant le renfort sans sortir du cadre de l'invention.

Les couches peuvent être de natures variées, constituées de matériaux poreux ou non et être déjà des assemblages en elles-mêmes sans sortir du cadre de l'invention qui consiste à améliorer la résistance à la traction depuis les bords de la nappe protectrice.

Les avantages de la nappe comportant des bords ondulés selon l'invention sont multiples :
- les forces de traction peuvent être mieux réparties ce qui évite le déchirement intempestif de la nappe lors de sa pose (dépliage et tension de la nappe) et de la dépose,
- les bords sont renforcés sur une largeur suffisante de manière à permettre la fixation au sol de la nappe par les moyens connus traditionnellement employés,
- la résistance plus importante de la nappe permet donc de plus nombreuses utilisations et ainsi un avantage économique déterminant pour les agriculteurs ou les horticulteurs.

Des nappes protectrices, avec des matériaux constitutifs adaptés et telles que réalisées avec des bords renforcés ondulés, sont utilisables dans d'autres domaines, par exemple dans la protection de sols, de toitures d'habitation et de recouvrement variés, à chaque fois qu'une résistance élevée du bord de la nappe avec amélioration de la répartition des contraintes appliquées est nécessaire dans l'application.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Nappe de protection pour les cultures comportant au moins une couche sur laquelle est assemblé au moins un bord muni d'un renforcement (1), **caractérisée en ce que** ledit renforcement (1) est assemblé sur ladite couche sur la totalité de sa surface, et qu'il est muni d'un côté interne (3) ondulé, selon une forme sensiblement sinusoïdale.

2. Nappe de protection selon la revendication 1, **caractérisée en ce que** la couche formant le renforcement (1) est de largeur réduite par rapport à la largeur de la nappe de protection finie.

3. Nappe de protection selon l'une des revendications 1 ou 2, **caractérisée en ce qu'**elle comporte un renforcement (1) sur au moins deux bords opposés.

4. Procédé de fabrication d'une nappe de protection selon la revendication 1, **caractérisé en ce que** l'ondulation du renforcement (1) est réalisée par l'assemblage d'une couche disposant d'un bord ondulé sur une couche dont les bords sont rectilignes.

5. Procédé de fabrication d'une nappe de protection selon la revendication 1, **caractérisé en ce que** l'ondulation du renforcement (1) est réalisée par l'assemblage d'une couche disposant d'un bord ondulé entre deux couches dont les bords sont rectilignes.

6. Procédé de fabrication d'une nappe de protection selon la revendication 1, **caractérisé en ce que** le renforcement (1) est réalisé par l'assemblage d'au moins deux couches dont l'une est appliquée au moyen d'un dispositif imprimant un mouvement oscillant latéral lors de son déroulage sur la couche inférieure, de manière à réaliser un renforcement (1) ondulé après assemblage.

7. Procédé de fabrication d'une nappe de protection selon l'une des revendications 1 et 2, **caractérisé en ce que** l'assemblage entre les différentes couches formant la nappe est réalisé par collage thermique ou ultrason, fusion, calandrage ou coextrusion.

## Patentansprüche

1. Schutzabdeckung für Pflanzenkulturen, die wenigstens eine Schicht aufweist, an der wenigstens ein Rand mit einer Verstärkung (1) angebracht ist, **dadurch gekennzeichnet, dass** diese Verstärkung (1) an der Schicht über ihre gesamte Oberfläche angebracht ist und dass sie eine wellenförmige Innenseite (3) mit einer im Wesentlichen sinusförmigen Gestalt aufweist.

2. Schutzabdeckung nach Anspruch 1, **dadurch gekennzeichnet, dass** die die Verstärkung (1) bildende Schicht eine mit Bezug auf die Breite der fertigen Schutzabdeckung kleinere Breite aufweist.

3. Schutzabdeckung nach einem der Ansprüche 1 oder 2, **dadurch gekennzeichnet, dass** sie an wenigstens zwei gegenüberliegenden Rändern eine Verstärkung (1) aufweist.

4. Herstellungsverfahren für eine Schutzabdeckung nach Anspruch 1, **dadurch gekennzeichnet, dass** die Wellenform der Verstärkung (1) durch das Anbringen einer Schicht mit einem wellenförmigen Rand an einer Schicht mit geraden Rändern ausgeführt wird.

5. Herstellungsverfahren für eine Schutzabdeckung nach Anspruch 1, **dadurch gekennzeichnet, dass** die Wellenform der Verstärkung (1) durch das Anbringen einer Schicht mit einem wellenförmigen Rand zwischen zwei Schichten mit geraden Rändern ausgeführt wird.

6. Herstellungsverfahren für eine Schutzabdeckung nach Anspruch 1, **dadurch gekennzeichnet, dass** die Verstärkung (1) durch das Anbringen wenigstens zweier Schichten ausgeführt wird, von denen eine mit einer Vorrichtung aufgebracht wird, die sich während des Abrollens auf die untere Schicht seitlich oszillierend bewegt, um nach dem Anbringen eine wellenförmige Verstärkung (1) auszuführen.

7. Herstellungsverfahren für eine Schutzabdeckung nach einem der Ansprüche 1 und 2, **dadurch gekennzeichnet, dass** das Anbringen zwischen den verschiedenen, die Abdeckung bildenden Schichten durch Heiß- oder Ultraschallkleben, Verschmelzen, Kalandrieren oder Coextrusion erreicht wird.

## Claims

1. Protective layer for crops comprising at least one layer on which at least one edge provided with reinforcement (1) is applied, **characterised in that** said reinforcement (1) is applied onto said layer over its entire surface and is provided with a wave-like inner side (3) with a substantially sinusoidal form.

2. Protective layer according to claim 1, **characterised in that** the layer forming the reinforcement (1) has a smaller width than the width of the finished protective layer.

3. Protective layer according to one of claims 1 or 2, **characterised in that** it comprises reinforcement (1) on at least two opposite edges.

4. Method for the production of a protective layer according to claim 1, **characterised in that** the wave form of the reinforcement (1) is formed by the application of a layer having a wave-like edge onto a layer with straight edges.

5. Method for the production of a protective layer according to claim 1, **characterised in that** the wave form of the reinforcement (1) is formed by the application of a layer having a wave-like edge between two layers with straight edges.

6. Method for the production of a protective layer according to claim 1, **characterised in that** the reinforcement (1) is formed by the application of at least two layers, one of which is applied by means of an imprinting device by a lateral oscillating movement during its unrolling over the lower layer, so as to form a wave-like reinforcement (1) after assembly.

7. Method for the production of a protective layer according to one of claims 1 or 2, **characterised in that** the assembly of the different layers forming the layer is performed by thermal or ultrasonic bonding, fusion, calendering or coextrusion.
